# EUROPÄISCHE PATENTSCHRIFT

(11) **EP 0 402 645 B1**
(45) Veröffentlichungstag und Bekanntmachung des Hinweises auf die Patenterteilung: **11.10.1995**
(21) Anmeldenummer: 90109223.9
(22) Anmeldetag: 16.05.1990
(51) Int. Cl.: B29C 45/14, B29C 45/56

(54) **Vorrichtung zum Anspritzen eines thermoplastischen Kunststoffteiles**
Apparatus for coating a thermoplastic part by means of injection moulding
Dispositif pour surmouler une pièce en matière thermoplastique

(30) Priorität: 13.06.1989 CH 2226/89
(43) Veröffentlichungstag der Anmeldung: 19.12.1990
(73) Patentinhaber: Tetra Laval Holdings & Finance SA, 1009 Pully (CH)
(72) Erfinder: Andersson, Pär, CH-1095 Lutry (CH)
(74) Vertreter: Weber, Dieter, Dr.

(56) Entgegenhaltungen:
- EP-A- 235 667
- EP-A- 391 098
- DE-C- 887 263
- FR-A- 2 228 591
- PATENT ABSTRACTS OF JAPAN vol.12, no.384 (M-753)(3231) 13. Oktober 1988 & JP-A-63 135 221 (HONDA MOTOR) 7. Juni 1988
- PATENT ABSTRACTS OF JAPAN vol.11, no.250 (M-616)(2697) 14. August 1987 & JP-A-62 060 624 (CASIO COMPUT) 17. März 1987

## Beschreibung

Die Erfindung betrifft eine Vorrichtung zum Anspritzen eines thermoplastischen Kunststoffteiles mit Schwächungslinien an den Rand eines dünnwandigen Körpers aus Papier oder Karton, insbesondere eines Kunststoffdeckels an den Rand eines Tubus aus mit Kunststoff beschichtetem Papier, wobei zwischen einem Innenformteil und einem Außenformteil ein Formraum gebildet ist, der mit der Düse einer Spritzeinheit mit Plastifizierzylinder und darin beweglicher Extruderschnecke in Eingriff bringbar ist, und wobei Einrichtungen zum Zusammendrücken der Formteile vorgesehen sind.

Eine solche Anspritzvorrichtung ist aus der EP-A-0.235.667 bekannt, bei der mittels Maschinen Flüssigkeitspackungen hergestellt, vorzugsweise sogar gefüllt, verschlossen und in einem Strang abgefördert werden. Bei derartigen Packungsherstellungsmaschinen wird ein Tubus aus mit Kunststoff beschichtetem Papier hergestellt, auf den Dorn eines Dornrades geschoben, und am offenen Ende des Dornes wird ein Kunststoffdeckel angespritzt. Die Spritzeinrichtung ist so aufgebaut, daß der Dorn das Innenformteil bildet, welches von zwei Außenformhälften im Abstand umgriffen wird, die damit das Außenformteil bilden. Durch den Abstand zwischen Innenformteil und Außenformteil ergibt sich dazwischen ein Formraum, in welchen über eine Extruderschnecke mittels hydraulisch angetriebener Zylinder-Kolbeneinheiten aus der Düse Kunststoff eingespritzt wird.

Kunststoffdeckel an Flüssigkeitspackungen werden dünnwandig gehalten, und die Zulaufkanäle für den flüssigen Kunststoff haben einen beschränkten Querschnitt, so daß sich ein hoher Fließwiderstand ergibt, welcher die erwähnten hohen Preßdrücke bedingt. Bei speziellen Maschinen hat man einen Einspritzdruck von 1000 bar. Dieser hohe Druck pflanzt sich vom Einspritzkanal in alle Teile des Formraumes fort. Durch die Eigenschaft der Plastizität des Kunststoffes wirkt dieser hohe Druck mit Nachteil bis in die Endteile des Formraumes. Daher müssen die Innen- und Außenformteile mit großen Kräften zusammengehalten werden. Schließkräfte von 1000 t sind bei größeren Maschinen nichts außergewöhnliches. Derart hohe Schließkräfte werden aufgebracht, um den Formraum im wesentlichen konstant zu halten.

Genauere Messungen im Formraum bekannter Maschinen haben nun aber gezeigt, daß der Druck, welcher aus dem Kunststoffmaterial im Formraum nach außen wirkt, im Betrieb den Formraum tatsächlich unter gewisser Deformation vergrößert. Sowohl die Lager des Innenformteils, z.B. des Dornes in einem Dornrad, als auch die Lager der Außenformhälften, die um Lagerwellen schwenkbar sind, werden hohen Kräften ausgesetzt und verlagern sich geringfügig in solche Richtungen, daß der Formraum vergrößert wird.

Kunststoffdeckel an Flüssigkeitspackungen weisen oft Öffnungseinrichtungen auf mit Schwächungslinien, die vom Endverbraucher zum Öffnen der Packung aufgerissen werden sollen, bis zum erstmaligen Öffnen aber zuverlässig flüssigkeitsdicht sein müssen. Es hat sich gezeigt, daß das Verhältnis der Wanddicke des Deckels zur Dicke der Schwächungslinie sehr exakt sein muß und daß die Deformation des Formraumes durch die erwähnten hohen Kräfte hier nachteilige Maßverschiebungen ergibt. Man hat schon versucht, durch voreingestellte Drücke auf das gewünschte Endmaß der Schwächungslinien zu kommen, hier spielen aber bei der Herstellung und im Betrieb der Packungsherstellungsmaschine die dem Fachmann bekannten Toleranzen eine große Rolle. Das gesamte Spritzsystem ist daher recht kritisch.

Beispielsweise kommt es sehr genau auf die Menge des in den Formraum eingespritzten Kunststoffes an, weil kleinste Erhöhungen der Einspritzmengen zu erheblichen Druckerhöhungen führen. Der zu plastifizierende Kunststoff muß also sehr dosiert eingespritzt werden, was aber durch Toleranzen der Näherungsschalter kritisch wird.

Bei den bekannten Packungsherstellungsmaschinen hat sich außerdem gezeigt, daß Mindestzeiten erforderlich sind, um das Innenformteil in die richtige Position zu bringen, die Außenformhälften zu schließen, den Kunststoff einzuspritzen, abzukühlen und die Formhälften wieder zu öffnen. Die durch das Spritzen vorgegebenen Zeiten legen die für die gesamte Maschine erreichbaren Taktseiten fest, so daß zeitliche Einsparungen an anderen Stellen der Maschine nicht genützt werden können.

Für eine gute Ausgestaltung eines Kunststoffdeckels wünscht man, den Einspritzkanal im Zentrumsbereich des Deckels anzuordnen, damit der flüssige Kunststoff aus der Mitte unter im wesentlichen gleichen Bedingungen radial nach außen strömen kann. Solange das flüssige Kunststoffmaterial durch den zentralen Kanal fließt, wird Wärme zugeführt, so daß man den Mittelbereich des Deckels während dieser Zeit nicht kühlen kann. Eine Verringerung der für die Bewegungen des Kunststoffes notwendigen Fließzeit wäre erstrebenswert.

Aus der DE-C-887.263 ist eine Vorrichtung bekannt, bei der ein Preßstempel nur geringfügig in die Öffnung einer Matrize hineingefahren wird, wodurch ein großer Gußhohlraum für das Einspritzen des plastifizierten Kunststoffes geschaffen wird. Bei weiterem Verfahren des einen Formteiles gegenüber dem anderen steigt der Druck, so daß sich der Kunststoff an die Oberflächen des Formraumes bewegen kann. Gegen Ende der Bewegung der Formteile ist der gesamte Formraum gefüllt, und in der Endphase der Bewegung wird der überschüssige Kunststoff durch Schlitze herausgedrückt.

Mit einer solchen Spritzgießvorrichtung kann man Kunststoffgegenstände auch in Form von verhältnismäßig dünnen Folien oder Platten gießen, ein Anspritzen an einen dünnwandigen Körper ist damit aber nicht vorgesehen. Das in der Endphase der Schließbewegung des Formraumes nach außen gedrückte Material stellt außerdem einen unwirtschaftlichen Störfaktor dar.

Die relativ zueinander bewegbaren Formteile können bei dieser bekannten Maschine nur vertikal bewegt werden, während die Außenformhälften bei der Maschine nach dem erstgenannten Dokument EP-A-0.235.667 nur horizontal seitwärts, nicht aber vertikal bewegbar sind. Ein Umbau der einen Vorrichtung unter Verwendung von Teilmerkmalen der anderen, insbesondere eine Kombination beider bekannter Vorrichtungen, ist daher schwerlich möglich.

Aus der JP-A-63-135221 sind ähnliche Vorrichtungen bekannt, bei denen in nur einer, z.B. horizontalen oder vertikalen Richtung Formteile relativ zueinander bewegt werden können. Diese Bewegung erfolgt nach dem Einschalten mit zwei unterschiedlichen Geschwindigkeitsstufen, z.B. in der ersten Stufe mit hoher oder mittlerer Geschwindigkeit und nach Umschalten mit geringerer Geschwindigkeit. Die Umschaltung erfolgt an einer bestimmten Position des beweglichen Formteils, die von einem Sensor erfaßt und verarbeitet wird. Die Bewegung der Formhälften aufeinander zu erfolgt außer mit den unterschiedlichen Geschwindigkeiten fortlaufend ohne Stillstand. Dadurch muß der Kunststoff mit aufwendigen Fördereinrichtungen stets gegen einen Widerstand in den kleiner werdenden Formhohlraum hineingedrückt werden. Hierdurch werden aber die Fördereinrichtungen aufwendig und unwirtschaftlich.

Aus der JP-A-62-60624 ist zwar auch ein ähnliches Verfahren bekannt, bei dem es kurz vor der Füllung des Formraumes eine leichte Öffnung und damit ein Lockern oder eine Druckverminderung gibt. Das Öffnen erfolgt aber durch den Einpreßdruck des Kunststoffes, so daß auch hier die aufwendigen Zuführeinrichtungen für den Kunststoff erforderlich sind. Dieses zuletzt erwähnte Dokument befaßt sich hauptsächlich mit Abstandshaltern, um diese kurzzeitige Lockerung der beiden Formhälften zu erreichen. Die Bewegung der Formhälften erfolgt wiederum nur in einer einzigen Richtung, und an ein Anspritzen von Kunststoff an einen dünnwandigen Körper aus Papier oder Karton ist nicht gedacht.

Der Erfindung liegt daher die Aufgabe zugrunde, die Vorrichtung zum Anspritzen eines Kunststoffteiles mit den eingangs erwähnten Merkmalen so zu verbessern, daß dünnere Kunststoffteile mit größerer Maßgenauigkeit möglichst in kürzerer Zeit und mit einfacheren Werkzeugen hergestellt werden können.

Diese Aufgabe wird erfindungsgemäß dadurch gelöst, daß Steuereinrichtungen zum Aufrechterhalten, Verkleinern und Vergrößern des Abstandes zwischen Außen- und Innenformteil angeordnet und von Antriebsmitteln betätigbar sind und daß das Innenformteil durch den Dorn eines um eine Drehwelle intermittierend drehbar angetriebenen Dornrades und das Außenformteil durch um zwei senkrecht zur Drehwelle des Dornrades verlaufende Schwenkachsen verschwenkbare Arme mit Außenformhälften gebildet sind und daß der jeweils kleinste Abstand zwischen der Drehwelle des Dornrades und den Schwenkachsen der Arme einstellbar veränderlich ist.

Zweckmäßige Weiterbildungen der Erfindung ergeben sich aus den abhängigen Ansprüchen. Zum einen kommt es auf die Veränderung des Volumens des Füllraumes an, weshalb bei der Betrachtung der Vorrichtungsteile die Veränderung des Abstandes zwischen Außen- und Innenformteil wesentlich wird. Dieser Abstand muß zu Beginn der ersten Verfahrensstufe vergrößert, im Verlaufe der ersten Verfahrensstufe aufrechterhalten und danach verkleinert werden. Die Lehre der Erfindung empfiehlt hier Steuereinrichtungen und Antriebsmittel für die Formteile. Als Steuereinrichtungen kann man sich beispielsweise Unterlagscheiben als Dickenbegrenzung zwischen Außen- und Innenformteil denken. Als Steuereinrichtung ist aber auch ein Antrieb denkbar, mit welchem die Lagerung des Innenformteiles verschoben wird. Alternativ kann man eine Steuereinrichtung im Sinne der Erfindung auch dann erhalten, wenn die Schwenkwellen der Außenformteile verschieblich so gelagert sind, daß sie beim Übergang zwischen der ersten und zweiten Verfahrensstufe eine Relativverschiebung bezüglich dem Innenformteil erfahren. Alle diese Maßnahmen und Steuerungsvorgänge dienen also zur Veränderung des Abstandes zwischen Außen- und Innenformteil bzw. sind in der Lage, diesen Abstand eine gewisse Zeit lang aufrechtzuerhalten, vorzugsweise während der ersten Stufe des Verfahrens, wenn also der plastifizierte Kunststoff in den Formraum eingespritzt wird. Diese somit beschriebenen Steuereinrichtungen werden von Antriebsmitteln vorzugsweise der Spritzeinheit betätigt. Dies bedeutet im Sinne der Erfindung, daß die Spritzeinheit mit der Extruderschnecke und ihren Bewegungen für die richtige Betätigung der Steuereinrichtungen sorgt. Die Steuereinrichtungen müssen nämlich je nach der Betriebsposition der Spritzeinheit bzw. der Anordnung der Extruderschnecke bezüglich des Plastifizierzylinders im richtigen Augenblick betätigt werden. Diese Antriebsmittel können mechanische oder hydraulische Kolben sein, denn im Augenblick des Beginnens des Vorschießens der Extruderschnecke in Richtung auf den Formraum müssen die Steuereinrichtungen so betätigt werden, daß sie den Abstand zwischen Außen- und Innenformteil konstant halten. Hat die Extruderschnecke dann ihre Endposition erreicht, d.h. ist der plastifizierte Kunststoff in den Formraum eingespritzt worden, dann werden die Steuereinrichtungen wiederum betätigt, um den Formraum zu verkleinern. Auf diese Weise füllt der sich im Formraum befindliche Kunststoff das gesamte Volumen des Formraumes aus, wonach die zweite Verfahrensstufe beendet ist. Zeitgesteuert oder auf andere geeignete Weise wird dann der erwähnte Abstand zwischen Außen- und Innenformteil wieder vergrößert, um das Volumen des Formraumes zu vergrößern und den Beginn der ersten Verfahrensstufe für den nächsten Spritzvorgang vorzubereiten.

Zum anderen erreicht man durch die neue Ausgestaltung die Verbesserung von Packungsherstellungsmaschinen bekannter Art, die intermittierend drehbare Dornräder haben, deren Dorne als Innenformteile verwendet werden. Legt man eine gemeinsame Ebene durch die Schwenkachsen der Arme mit den Außenformhälften, dann ist die kürzeste Verbindungslinie zur Drehwelle des Dornrades bei diesem Aufbau nach der erfindungsgemäßen Lehre einstellbar veränderlich. Entsprechende Lager kann man hydraulisch oder mechanisch in ihrer Ortslage verschieben, wenn die richtigen Steuersignale vorgegeben werden.

Mit der neuen Vorrichtung wird eine dosierte Menge plastifizierten Kunststoffmateriales in den Formraum eingespritzt, und dafür werden erheblich geringere Einspritzdrücke gefordert. Auch werkzeugseitig braucht man zunächst in einer ersten Stufe während des Einspritzens von Kunststoff geringere Klemmkräfte, denn das Volumen des Formraumes wird auf einem ersten großen Volumenwert gehalten, der in einer Verfahrensstufe verringert wird. Ist nämlich nach Abschluß des Einspritzvorganges die gewünschte und dosierte Menge plastifizierten Kunststoffes im Formraum enthalten, dann erst werden Außen- und Innenformteile unter Verkleinerung des Volumens des Formraumes um ein geringes Maß zusammengeführt, wobei die Klemmkraft zum Zusammendrücken der Formteile in dieser zweiten Stufe selbstverständlich größer als die in der ersten Stufe ist. Der Vorteil durch das nachträgliche Erhöhen der Klemmkräfte und das nachträgliche Verkleinern des Formraumes liegt darin, daß gerade im Zentrumsbereich des angespritzten Kunststoffteiles die Materialien im wesentlichen in Ruhe bleiben und nur an den äußeren Randteilen des Materialfleckes, d.h. des Tropfens des plastifizierten Kunststoffes, Bewegungen stattfinden. Da die Fließgeschwindigkeit des plastifizierten Kunststoffes im Formraum proportional zum Druck im Formraum ist, mit welchem unter anderem auch die Formteile auseinandergedrückt werden, ergibt sich im Zentrumsbereich des anzuspritzenden Kunststoffteiles bzw. des Tropfens des plastifizierten Kunststoffes ein geringer Druck und an den Rändern des Tropfens ein hoher Druck. Die Kunststoffmasse bewegt sich also während der zweiten Verfahrensstufe schneller außen am Rand, während sich im Zentrum fast nichts bewegt.

Dabei ist es vorteilhaft, wenn der plastifizierte Kunststoff zentral in die Mitte des Formraumes eingespritzt wird und wenn im Verlaufe der zweiten Stufe beim Erhöhen der Klemmkraft zum Zusammendrücken der Innen- und Außenformteile der Druck im Formraum von seiner Mitte nach außen zunimmt. Beispielsweise ist es besonders vorteilhaft, wenn der plastifizierte Kunststoff in der ersten Stufe mit einem Druck von etwa 100 bar in den auf großem Volumen gehaltenen Formraum eingespritzt wird und die Klemmkraft zum Zusammendrücken der Innen- und Außenformteile etwa 3 t beträgt.

Bei herkömmlichen Verfahren benötigte man noch eine Taktzeit von 2,1 Sekunden, denn auch die plastifizierte Kunststoffmasse konnte durch die engen Strömungskanäle nur verhältnismäßig langsam fließen, wenn man berücksichtigt, daß ein Fließen im Bereich der Schwächungslinien an der Aufreißöffnung einer Flüssigkeitspackung praktisch nicht möglich ist.

Durch die Vorrichtung gemäß der neuen Erfindung kann also nicht nur die Klemmkraft verringert werden, sondern man erreicht sogar Materialdicken für das zu spritzende Kunststoffteil von nur 0,5 mm mit der günstigen Folge einer erheblichen Materialersparnis. Gleichzeitig verringert sich auch die Taktzeit zum Anspritzen der Kunststoffteile an den Rand des Papierkörpers auf unter 1,8 Sekunden.

Wie oben schon kurz angedeutet, kann bei vorteilhafter weiterer Ausgestaltung der Erfindung die Steuereinrichtung zur Veränderung des Abstandes zwischen Außen- und Innenformteil Distanzbleche aufweisen. Alternativ ist es aber ebenso möglich, wenn erfindungsgemäß die Steuereinrichtung zur Veränderung des Abstandes zwischen Außen- und Innenformteil eine hydraulische und/oder pneumatische Kolben-Zylinder-Anordnung zur Verschiebung des Innenformteils gegenüber dem Außenformteil aufweist.

Besonders günstig ist erfindungsgemäß die Verwendung einer Vorrichtung nach einem der Ansprüche 1 bis 3 zur Herstellung einer Packung für Fließmittel, wobei die Packung aus miteinander über eine Längssiegelnaht tubusförmig verbundenen Seitenwänden und an den Enden des Tubus angebrachten Stirnwänden besteht, die Deckel und Boden der Packung bilden. Zwar können beliebige Kunststoffteile an den Rand dünnwandiger Körper aus Papier oder dergleichen mit dem erfindungsgemäßen Verfahren angespritzt werden, und die hierfür verwendete Vorrichtung läßt sich technisch einfacher und wirtschaftlich preiswerter herstellen, besonders bevorzugt läßt sich das zweistufige Verfahren mit der Vorrichtung gemäß der Erfindung aber bei Packungsherstellungsmaschinen einsetzen, wie sie in bekannter Konstruktion eingangs teilweise schon beschrieben wurden. Flüssigkeitspackungen werden schon jetzt mit großer Leistung (große Stückzahl pro Zeiteinheit) hergestellt, gefüllt und verschlossen, und die erfindungsgemäßen Maßnahmen vereinfachen nicht nur die Werkzeuge, weil die aufzubringenden Klemmkräfte für die Formteile verringert werden können, sondern die gesamte Maschine kann mit noch kürzeren Taktzeiten arbeiten, woraus höhere Leistungen folgen bzw. der eingangs erwähnte Nachteil beseitigt wird, so daß die Taktzeit beim Einspritzen nicht mehr die Leistungsgrenze für die Packungsmaschine darstellt. Außerdem kann man Packungsdeckel mit geringerer Dicke und gleichwohl größerer Maßgenauigkeit herstellen, d.h. das Verhältnis der auf 0,5 mm herabgesetzten Dicke des Deckels zur Schwächungslinie von beispielsweise 0,15 bis 0,20 mm kann exakt gehalten werden.

Durch die verringerten Drücke beim Einspritzen von Kunststoff in den Formraum im Vergleich zu den vorgenannten 1000 bar Druck bei bekannten Maschinen, jetzt nach Anwendung der vorliegenden Erfindung nur 600 bar, kann man kleinere und sogar mechanisch gesteuerte und bewegte Einspritzeinheiten anstelle der herkömmlichen großen hydraulischen Einrichtungen mit Vorteil verwenden.

Günstig ist gemäß der Erfindung auch die Verwendung einer Vorrichtung nach einem der Ansprüche 1 bis 3 zur Herstellung einer Packung für Fließmittel, wobei der Kunststoffdeckel ohne Trägermaterial die Ausgießvorrichtung aufweist und der Boden aus mit den Seitenwänden einstückigen Papierteilen durch Faltung und Versiegelung gebildet ist.

Gerade dieser Typ von Packungen wird gern in großen Stückzahlen hergestellt und vom Endverbraucher benutzt. Deshalb ist es sehr erwünscht, daß gerade diese Art Packung mit Kunststoffdeckel mit Ausgießvorrichtung durch die erfindungsgemäße Vorrichtung unter Anwendung des zweistufigen Verfahrens herstellbar wird.

Ausführungsbeispiele der Erfindung sind in der anliegenden Zeichnung dargestellt und werden im folgenden näher beschrieben.

Es zeigen:
- Figur 1: schematisch und abgebrochen die Seitenansicht einer Vorrichtung zum Anspritzen eines thermoplastischen Kunststoffteiles an den Rand eines Papiertubus,
- Figur 2: Außen- und Innenformteile schematisiert während der ersten Stufe mit dem Formraum mit großem Volumen,
- Figur 3: eine ähnliche Darstellung wie Figur 2, jedoch mit dem Formraum mit verkleinertem Volumen,
- Figur 4: die Querschnittsansicht eines Kunststoffdeckels einer herkömmlichen Packung,
- Figur 5: eine Einzelheit der Ausgießeinrichtung der Figur 4,
- Figur 6: ein Kurvendiagramm unter Darstellung der Abhängigkeit zwischen den Klemmkräften zum Zusammenhalten der Formteile einerseits und der Dicke des angespritzten Kunststoffteiles (Abszisse) andererseits und
- Figur 7: das Diagramm einer Kurve zur Darstellung der Abhängigkeit zwischen den notwendigen Kühlzeiten und den Dikkenwerten des gespritzten Kunststoffteiles.

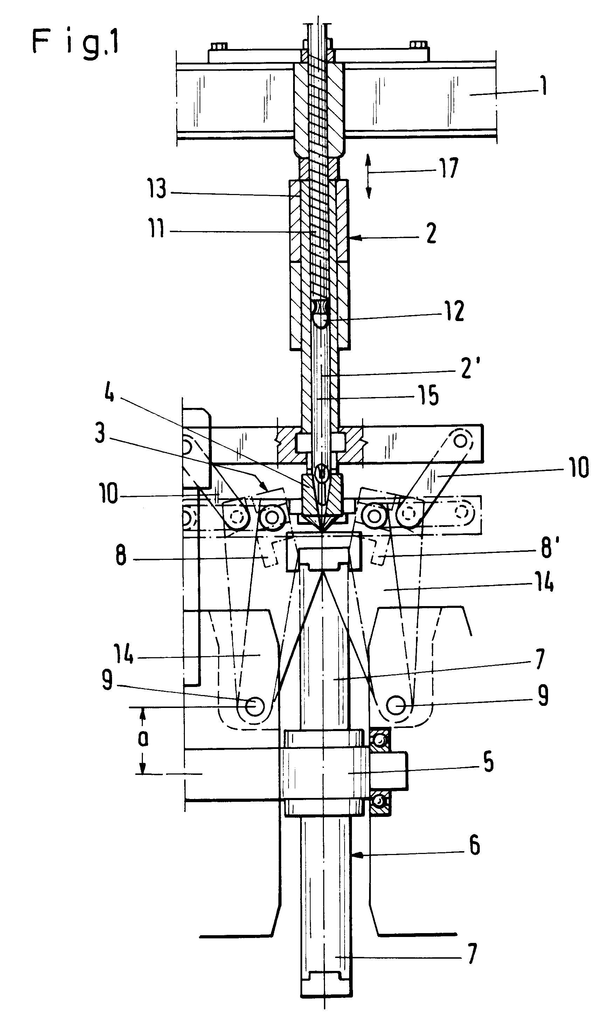

In Figur 1 ist die gesamte Anspritzvorrichtung gezeigt. Am Maschinengestell 1 ist im oberen Bereich eine mit 2 bezeichnete Gesamtspritzeinheit befestigt, an deren dem allgemein mit 3 bezeichneten Werkzeug zugewandten Ende die Düse 4 angebracht ist. Diese befindet sich durch die feste Anbringung der Gesamtspritzeinheit 2 am Maschinengestell 1 in bestimmtem Abstand über der Welle 5 eines Dornrades 6, dessen Dorne 7 radial abstehen und intermittierend so geschaltet werden können, daß jeweils ein Dorn 7 als Innenformteil in der in Figur 1 gezeigten Position unter der Düse 4 so steht, daß die strichpunktiert in der Mitte der Figur 1 vertikal von unten nach oben verlaufende Längsachse des Dornes 7 mit der Längsachse 2′ der Gesamtspritzeinheit 2 in Flucht liegt. Der eigentliche Formraum für das Kunststoffteil ist in Figur 1 nicht ausdrücklich dargestellt. Er wird auf der Oberseite des Dornes 7 von diesem als Innenformteil und den zwei Außenformteilen 8, 8′ gebildet. Während die Drehwelle 5 des intermittierend drehbaren Dornrades 6 im unteren Bereich angeordnet ist, weist das aus den zwei Außenformhälften 8, 8′ gebildete Außenformteil verschwenkbare Arme 14 auf, die um Schwenkachsen 9 aus der in Figur 1 mit strichpunktierter Linie gezeigten Position in die mit ausgezogenen Linien gezeigte Position schwenkbar sind. Die Schwenkachsen 9 verlaufen senkrecht zur Erstreckung der Längsachse der Drehwelle 5, und sie sind im Abstand a von der Drehwelle 5 des Dornrades 6 angeordnet. Dieser Abstand a zwischen der Drehwelle 5 und der Schwenkachsen 9 ist veränderlich und einstellbar.

Die Arme 14 sind mittels Antriebshebeln 10 in die erwähnte geschlossene bzw. geöffnete Stellung schwenkbar. Die geöffnete Stellung ist in Figur 1 strichpunktiert gezeigt, die geschlossene Stellung mit ausgezogenen Linien.

Die Spritzeinheit 2 weist mittig zentral eine Extruderschnecke 11 mit einer Spitze 12 vorn auf, welche der Düse 4 zugewandt ist. Zwischen der Düse 4 und der Spitze 12 der Extruderschnekke 11 befindet sich der Füllraum 15, welcher sich innerhalb des Plastifizierzylinders 13 befindet. Im Betrieb ist die Extruderschnecke 11 in Richtung ihrer Längsachse 2′ gemäß dem Doppelpfeil 17 nach oben und unten bewegbar, unter anderem auch zum Einschießen des plastifizierten Kunststoffes in den Füllraum 15.

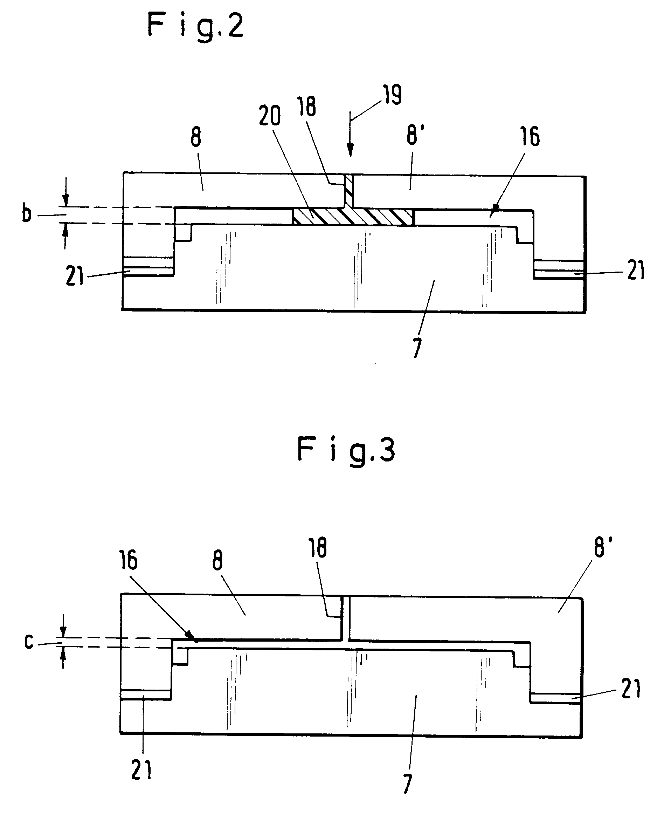

Der Füllraum 15 oberhalb der Düse 4 ist zu unterscheiden vom Formraum 16. Schematisch sieht man diesen und die beiden Verfahrensstufen in den Figuren 2 und 3. Die Außenformteile 8, 8′ sind bei den in den Figuren 2 und 3 genommenen mittleren Vertikalschnitten gerade durch den Einspritzkanal 18 voneinander getrennt. Aus der in den Figuren 2 und 3 nicht dargestellten Düse 4 der Spritzeinheit 2 wird plastifizierter Kunststoff in Richtung des Pfeiles 19 in den Formraum 16 mit einem Druck von 100 bar eingespritzt, so daß der schraffiert gezeigte Teilraum 20 gefüllt wird. Der Abstand zwischen der Unterkante der Außenformteile 8, 8′ und der Oberfläche des Innenformteils 7 hat bei der in Figur 2 gezeigten ersten Stufe einen großen Wert b, woraus sich bei gleichbleibenden Flächen der Formteile, die einander gegenüberliegen, ein größeres erstes Volumen ergibt . Dieses ist größer als das Volumen des in dem Raum 20 eingespritzten Kunststofftropfens, weshalb der um das Teilvolumen 20 herum verbleibende nicht schraffierte Bereich des Formraumes 16 leer bleibt. Der Fachmann versteht, daß der plastifizierte Kunststoff nur mit geringem Druck in Richtung des Pfeiles 19 eingespritzt zu werden braucht, nämlich bei einem bevorzugten Ausführungsbeispiel etwa 100 bar.

Verwendet man als Steuereinrichtungen Unterlagscheiben 21, wie in den Figuren 2 und 3 gezeigt ist, dann berühren die Außenflächen der Formteile 7, 8, 8′ sich nicht, auch nicht die Unterlagscheiben 21. Wenn der nicht dargestellte mechanische Antriebskolben für die Extruderschnecke 11 als Antriebsmittel die untere Position erreicht hat, in welcher der Kunststoff den Teilraum 20 im Füllraum 16 gefüllt hat, dann wird ein weiterer Antrieb betätigt (dies kann man auch mechanisch über Nockenscheiben und Steuerkurven erreichen), Außen- und Innenformteile fahren aufeinanderzu, so daß der Formraum 16 ein kleineres Volumen erhält, und der zuvor mit "b" bezeichnete Abstand der gegenüberliegenden Oberflächen im Formraum nimmt einen Abstand c ein, wie in Figur 3 gezeigt ist.

Während der zweiten Stufe des Verfahrens erhält der Formraum 16 also ein kleineres Volumen, nämlich durch Zusammenfahren der Schwenkachsen 9 und Drehwelle 5, wobei die Klemmkraft zum Zusammendrücken der Innen- (7) und Außenformteile (8, 8′) höher als die Klemmkraft in der ersten Stufe ist, im Falle der 100 bar in der ersten Stufe: nämlich bei der betrachteten speziellen Ausführungsform beispielsweise 3 t beträgt. Der gesamte Formraum 16 ist am Ende der Stufe 2 gemäß Darstellung der Figur 3 mit plastifiziertem Kunststoff gefüllt. Die Unterlagscheiben 21 liegen in Anlage zwischen Außen- und Innenformteilen und geben den Abstand c vor.

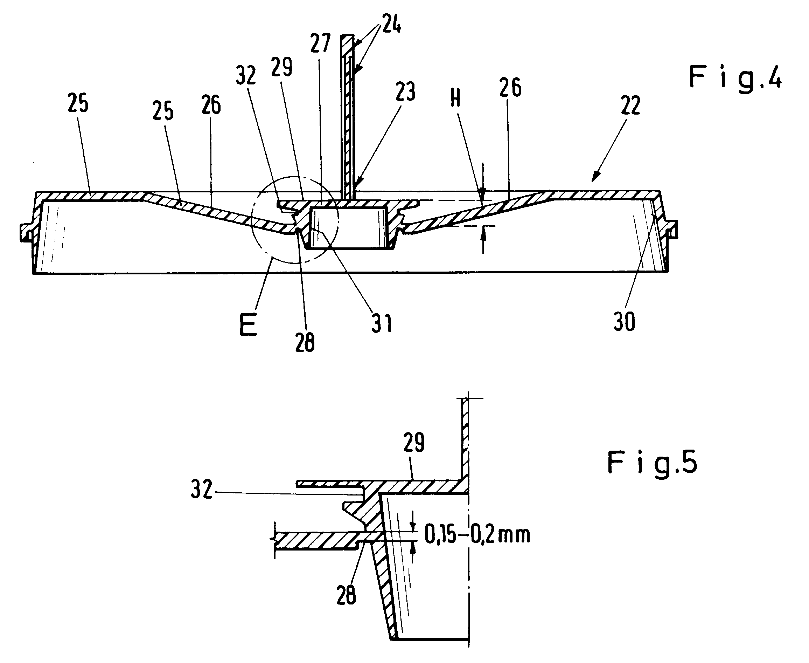

Während der Formraum 16 schematisiert und vereinfacht in den Figuren 2 und 3 dargestellt ist, um das Verfahren besser zu erläutern, ist in Figur 4 das dem Formraum entsprechende Produkt gezeigt, hier der Deckel 22 einer Flüssigkeitspackung mitsamt einer Einzelheit E, die in Figur 5 vergrößert herausgezeichnet ist. Der Deckel hat mittig an einer Kante eine allgemein mit 23 bezeichnete Ausgießvorrichtung und einen Griff 24. Die Oberfläche 25 des Deckels 22 hat äußere ebene und mittlere schräge Flächen, wobei letztere mit 26 bezeichnet sind. Diese sorgen dafür, daß die Öffnungsvorrichtung 23 innerhalb der Außenkontur des Deckels 22 angeordnet werden kann. Die herausziehbare Lasche 27 ist über eine Schwächungslinie 28 mit der Schrägwandung 26 verbunden, und obwohl die Oberfläche 29 der Verschlußlasche 27 im Abstand H von der weiter zum Pakkungsinneren angeordneten Schwächungslinie 28 nicht unerheblich ist, ragt außer dem Griff 24 kein Teil der Öffnungsvorrichtung 23 aus der Außenkontur des Deckels 22 heraus. Über einen Bund 30 ist der Deckel am nicht dargestellten Tubus der Packung anspritzbar. Will der Benutzer die Packung öffnen, dann zieht er am Griff 24 und reißt die Verschlußlasche 27 dadurch hoch, daß die in Figur 5 größer herausgezeichnete Schwächungslinie 28 mit einer Dicke zwischen 0,15 und 0,20 mm aufreißt. Der Kragen 31 der Verschlußlasche kann ganz aus der sich dadurch ergebenden Ausgießöffnung herausgeklappt werden. Eine Nut 32 dient dem späteren Wiederverschließen.

Die Deckelwandung 25 hat eine Dicke, die bei bekannten Pakkungen z.B. bei 0,65 mm liegt. Aus Figur 5 ist ersichtlich, daß die Dicke des Produktes im Bereich der Schwächungslinie 28 wesentlich kleiner ist, nämlich etwa 0,15 bis 0,2 mm, damit der Aufreißvorgang wunschgemäß jederzeit funktioniert und dennoch vor dem Aufreißen die Packung mit Sicherheit flüssigkeitsdicht ist.

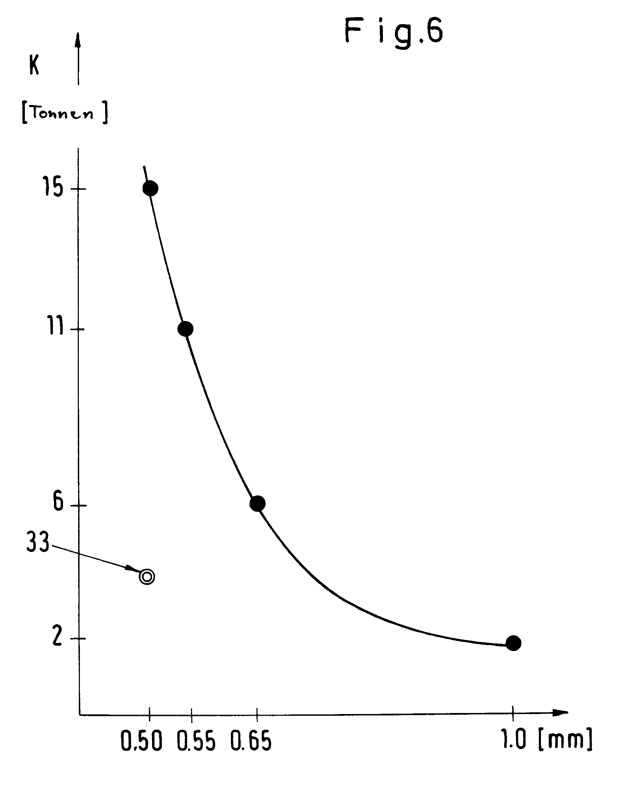

In Figur 6 ist die erwähnte Dicke der Deckelwandung 25 über der Klemmkraft K aufgetragen. Nimmt man bei einem Beispiel an, daß 6 g Kunststoff benötigt wird, um den Formraum 16 zu füllen, und hält man den Formraum beispielsweise im Zustand der Figur 3 geschlossen, dann versteht es sich, daß bei geringfügigem Öffnen des Formraumes, d.h. bei größer werdendem Abstand c, der Druck des eingespritzten Kunststoffes im Formraum erheblich kleiner wird. Infolgedessen nimmt auch die Klemmkraft ab, mit welcher die Formteile zusammengedrückt werden. Folgt man nun der Kurve der Figur 6 auf der Abszisse von links nach rechts, dann wird zuerst der oberste linke Punkt betrachtet, bei welchem eine Klemmkraft von 15 t erforderlich ist, wenn die Dicke c zwischen Außen- und Innenformteilen nur 0,5 mm beträgt. Verständlicherweise konnte in der Praxis im laufenden Betrieb einer Packungsherstellungsmaschine eine solche Klemmkraft zur Erreichung eines derart dünnen Deckels nicht angestrebt und durchgeführt werden. Deformationen und damit Vergrößerungen des Formraumes erbrachten hingegen geringere Klemmkräfte, weshalb in der Praxis der dritte Punkt von links gefahren wurde, d.h. ein Deckel mit einer Dicke der Wandungen 25 in der Größe c = 0,65 mm hergestellt wurde. Hierzu waren Klemmkräfte für die Werkzeuge in der Größenordnung von 6 t erforderlich. Betrachtet man jetzt den Doppelkreispunkt 33, wie er durch das hier beschriebene Verfahren und die neue Vorrichtung erreichbar ist, dann versteht man sogleich die überraschende Wirkung und die Vorteile. Es kann also eine Dicke c der Deckelwandung 25 von nur 0,5 mm erreicht werden, wenngleich die Klemmkraft nur etwa 3 t beträgt. Eine durch diesen Punkt 33 gelegte Kurve sieht natürlich günstiger aus.

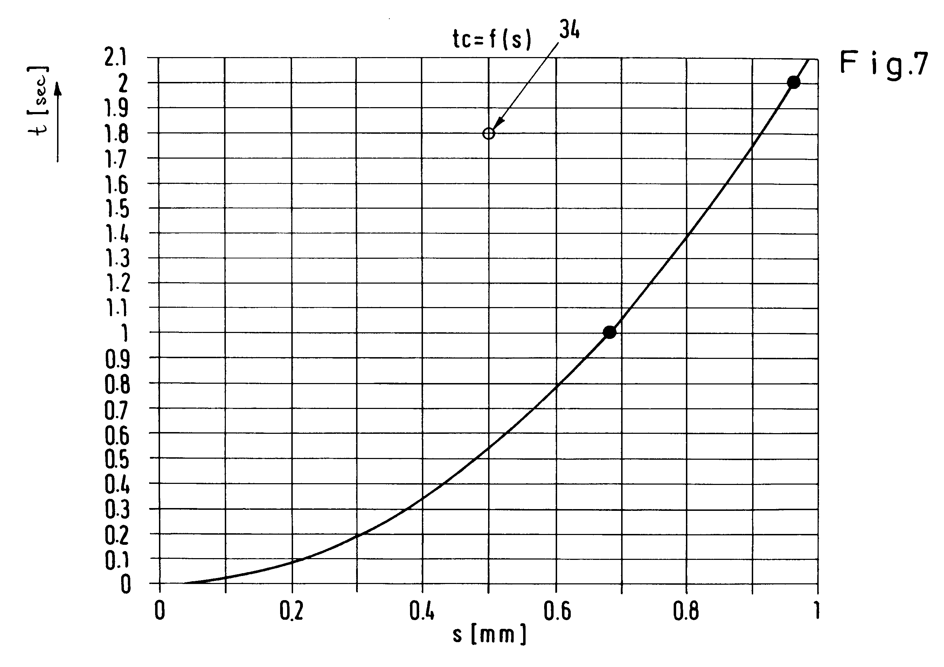

Interessant ist schließlich die Betrachtung der Figur 7 mit dem Kurvendiagramm, bei welchem über der Abszisse die Dicke des Deckels in Millimeter und auf der Ordinate die Zeit zum Aushärten des Kunststoffes aufgetragen ist, nach welcher Innen-und Außenformteile geöffnet werden können. Bei einer Deckeldicke von etwa 0,68 mm benötigt man zum Abkühlen bei herkömmlichen Verfahren 1 Sekunde. Wollte man eine Dicke der Deckelwandung 25 von nur 0,5 mm erreichen, dann stünden nur noch 0,5 Sekunden Kühlzeit zur Verfügung. Dies war bei den bisherigen Herstellungsverfahren unerreichbar. Wenn jetzt in Figur 7 der Punkt 34 betrachtet wird, erkennt der Fachmann sogleich die unerwartete Wirkung der oben beschriebenen Maßnahmen und die Vorteile. Bei einer Dicke von 0,5 mm stehen im Betrieb 1,8 Sekunden zum Abkühlen zur Verfügung.

## Patentansprüche

1. Vorrichtung zum Anspritzen eines thermoplastischen Kunststoffteiles mit Schwächungslinien (28) an den Rand eines dünnwandigen Körpers aus Papier oder Karton, insbesondere eines Kunststoffdeckels (22) an den Rand eines Tubus aus mit Kunststoff beschichtetem Papier, wobei zwischen einem Innenformteil (7) und einem Außenformteil (8, 8') ein Formraum (16) gebildet ist, der mit der Düse (4) einer Spritzeinheit (2) mit Plastifizierzylinder (3) und darin beweglicher Extruderschnecke (11) in Eingriff bringbar ist, und wobei Einrichtungen (10, 14) zum Zusammendrücken der Formteile (7, 8, 8') vorgesehen sind, dadurch gekennzeichnet, daß Steuereinrichtungen (21) zum Aufrechterhalten, Verkleinern und Vergrößern des Abstandes (b, c) zwischen Außen- (8, 8') und Innenformteil (7) angeordnet und von Antriebsmitteln betätigbar sind und daß das Innenformteil (7) durch den Dorn eines um eine Drehwelle (5) intermittierend drehbar angetriebenen Dornrades (6) und das Außenformteil (8, 8') durch um zwei senkrecht zur Drehwelle (5) des Dornrades (6) verlaufende Schwenkachsen (9) verschwenkbare Arme (14) mit Außenformhälften gebildet sind und daß der jeweils kleinste Abstand (a) zwischen der Drehwelle (5) des Dornrades (6) und den Schwenkachsen (9) der Arme (14) einstellbar veränderlich ist.

2. Vorrichtung nach Anspruch 1, dadurch gekennzeichnet, daß die Steuereinrichtung (21) zur Veränderung des Abstandes (a) zwischen Außen- (8, 8') und Innenformteil (7) Distanzbleche (21) aufweist.

3. Vorrichtung nach Anspruch 1 oder 2, dadurch gekennzeichnet, daß die Steuereinrichtung zur Veränderung des Abstandes (a) zwischen Außen- (8, 8') und Innenformteil (7) eine hydraulische und/oder pneumatische Kolben-Zylinder-Anordnung zur Verschiebung des Innenformteiles (7) gegenüber dem Außenformteil (8, 8') aufweist.

4. Verwendung einer Vorrichtung nach einem der Ansprüche 1 bis 3 zur Herstellung einer Packung für Fließmittel, wobei die Packung aus miteinander über eine Längssiegelnaht tubusförmig verbundenen Seitenwänden und an den Enden des Tubus angebrachten Stirnwänden besteht, die Deckel (22) und Boden der Packung bilden.

5. Verwendung nach Anspruch 4, wobei der Kunststoffdeckel (22) ohne Trägermaterial die Ausgießvorrichtung (23) aufweist und der Boden aus mit den Seitenwänden einstückigen Papierteilen durch Faltung und Versiegelung gebildet ist.

## Claims

1. Apparatus for injection moulding a thermoplastic portion having weakening lines (28) on to the edge of a thin-wall body of paper or cardboard, in particular a plastics cover (22) on to the edge of a tube of paper which is coated with plastics material, wherein formed between an inner mould member (7) and an outer mould member (8, 8') is a mould cavity (16) which can be brought into engagement with the nozzle (4) of an injection unit (2) with plasticising cylinder (3) and extruder screw (11) which is movable therein, and wherein there are provided means (10, 14) for pressing the mould members (7, 8, 8') together, characterised in that control devices (21) are arranged for maintaining, reducing and increasing the spacing (b, c) between the outer mould member (8, 8') and the inner mould member (7) and are actuable by drive means, and that the inner mould member (7) is formed by the bar of a bar wheel (6) which is intermittently driven in rotation about a rotary shaft (5) and the outer mould member (8, 8') is formed by arms (14) with outer mould halves, which arms are pivotable about two pivot axes (9) extending perpendicularly to the rotary shaft (5) of the bar wheel (6), and that the respectively smallest spacing (a) between the rotary shaft (5) of the bar wheel (6) and the pivot axes (9) of the arms (14) is adjustably variable.

2. Apparatus according to claim 1 characterised in that the control device (21) for varying the spacing (a) between the outer mould member (8, 8') and the inner mould member (7) has spacer plates (21).

3. Apparatus according to claim 1 or claim 2 characterised in that the control device for varying the spacing (a) between the outer mould member (8, 8') and the inner mould member (7) has a hydraulic and/or pneumatic piston-cylinder arrangement for displacement of the inner mould member (7) relative to the outer mould member (8, 8').

4. Use of an apparatus according to one of claims 1 to 3 for producing a pack for fluids wherein the pack comprises side walls which are connected together in a tubular configuration by way of a longitudinal sealing seam and end walls which are mounted at the ends of the tube and form the cover (22) and the bottom of the pack.

5. Use according to claim 4 wherein the plastics cover (22) without support material has the pouring arrangement (23) and the bottom is formed by folding and sealing from paper portions which are integral with the side walls.

## Revendications

1. Dispositif pour rapporter par injection une pièce en un matériau thermoplastique, comportant des lignes d'affaiblissement (28), sur le bord d'un objet à faible épaisseur de paroi, en papier ou en carton, en particulier un couvercle plastique (22) sur le bord d'un tube en un papier enduit de plastique, dispositif dans lequel, entre une partie de moule intérieure (7) et une partie de moule extérieure (8, 8') est formée une chambre (16), qui peut entrer en prise avec la buse (4) d'une unité d'injection (2) comportant un cylindre de plastification (3) et, mobile à l'intérieur de ce dernier, une vis d'extrusion (11), et dans lequel on prévoit des dispositifs (10, 14) pour réunir par compression les parties de moule (7, 8, 8'), caractérisé en ce que des dispositifs de commande (21), destinés à maintenir, diminuer et agrandir la distance (b, c) entre la partie de moule extérieure (8, 8') et la partie de moule intérieure (7), sont disposés et peuvent être manoeuvrés par des organes d'entraînement, et que la partie de moule intérieure (7) est formée par le mandrin d'une roue à étoiles (6), entraînée en rotation intermittente autour d'un arbre de rotation (5), et la partie de moule extérieure (8, 8') est formée de deux bras (14), pouvant pivoter autour de deux axes de pivotement (9), courant perpendiculairement à l'arbre de rotation (5) de la roue à étoiles (6), avec des moitiés de moule extérieures, et qu'est ajustable la distance (a) dans tous les cas la plus petite entre l'arbre de rotation (5) de la roue à étoiles (6) et les axes de pivotement (9) des bras (14).

2. Dispositif selon la revendication 1, caractérisé en ce que le dispositif de commande (21) destiné à modifier la distance (a) entre la partie de moule extérieure (8, 8') et la partie de moule intérieure (7) comporte des tôles d'écartement (21).

3. Dispositif selon la revendication 1 ou 2, caractérisé en ce que le dispositif de commande comporte, pour modifier la distance (a) entre la partie de moule extérieure (8, 8') et la partie de moule intérieure (7) un dispositif à piston-cylindre hydraulique et/ou pneumatique, destiné à déplacer la partie de moule intérieure (7) par rapport à la partie de moule extérieure (8, 8').

4. Utilisation d'un dispositif selon l'une des revendications 1 à 3, pour fabriquer un emballage destiné à des liquides, dans lequel l'emballage est constitué de parois latérales assemblées en forme de tube les unes avec les autres par l'intermédiaire d'un joint thermoscellé longitudinal, et de parois frontales rapportées aux extrémités du tube, parois frontales formant le couvercle (22) et le fond de l'emballage.

5. Utilisation selon la revendication 4, dans laquelle le couvercle plastique (22) comporte, sans matériau support, le dispositif verseur (23), et le fond est formé, par pliage et thermoscellage, de parties en papier solidaires des parois latérales.
